# EUROPEAN PATENT APPLICATION

(11) **EP 4 783 721 A1**
(43) Date of publication of application: **29.07.2026**
(21) Application number: 23953732.7
(22) Date of filing: 28.09.2023
(51) Int. Cl.: H04W 76/12

(54) **METHOD AND APPARATUS FOR ESTABLISHING TUNNEL FOR TASK**

(71) Applicant: HUAWEI TECHNOLOGIES CO., LTD., Shenzhen, Guangdong 518129 (CN)
(72) Inventor: HUANG, Huanhuan, Shenzhen, Guangdong 518129 (CN); PENG, Chenghui, Shenzhen, Guangdong 518129 (CN); XING, Weijun, Shenzhen, Guangdong 518129 (CN); WANG, Jun, Shenzhen, Guangdong 518129 (CN); LIU, Zhe, Shenzhen, Guangdong 518129 (CN); WANG, Fei, Shenzhen, Guangdong 518129 (CN)
(74) Representative: Körber, Martin Hans
(86) International application number: PCT/CN2023/122787
(87) International publication number: WO 2025/065586

(57) **Abstract**

A method for establishing a tunnel for a task and an apparatus are provided. The method includes: A TFF receives a first request message from a TCF, where the first request message is used to request the TFF to establish a tunnel for a first task. The TFF sends, to the TCF, a first response message in response to the first request message, where the first response message includes tunnel information of the TFF associated with the first task. The TFF receives, from the TCF, tunnel information of an access network device associated with the first task. According to the design, a tunnel for a task may be established between the access network device and the TFF, and at least one terminal and/or at least one TPF participating in the task may share the tunnel for the task and exchange task data, thereby simplifying complexity of the access network device and the TPF.

## Description

### TECHNICAL FIELD

This application relates to the field of communication technologies, and in particular, to a method for establishing a tunnel for a task and an apparatus.

### BACKGROUND

In a future 6th generation (6th generation, 6G) communication system, to support a new service, a network needs to efficiently collaborate and schedule various heterogeneous resources, such as computational power, data, or models. In the 6G communication system, a process of completing a specific objective through collaboration of multi-dimensional resources (such as computational power, data, and models) is referred to as a "task". To enable controllable execution of tasks in the network, new logical functions are required, such as a task anchor (task anchor, TA) and a task executor (task anchor, TE). The TA is responsible for managing a lifecycle of a task, including task deployment, initiation, deletion, modification, monitoring, and the like. The TE is responsible for specific execution of the task and performing data exchange at a service-logic level. The TA can receive an external task request and deploy the task to one or more TEs for execution. In the 6G communication system, a task control function (task control function, TCF) is added to a core network to provide a TA function, and a task process function (task process function, TPF) is added to provide a TE function. In addition, the terminal may provide the TE function.

The TCF may deploy one task to at least one terminal and/or at least one TPF for execution. During task execution, different task executors need to exchange task data. For a specific task, how to establish a tunnel for the task to implement exchange of the task data is a technical problem that needs to be resolved.

### SUMMARY

This application provides a method for establishing a tunnel for a task and an apparatus. A tunnel for a first task is established between an access network device and a TFF, and the tunnel may be used to route and forward task data of different task executors.

According to a first aspect, a method for establishing a tunnel for a task is provided. The method is executed by a TFF or a module (for example, a chip or a circuit) in the TFF. The method includes: receiving a first request message from a task control function TCF, where the first request message is used to request a task forward function TFF to establish a tunnel for a first task, and the first task is completed through collaboration of multi-dimensional resources; sending, to the TCF, a first response message in response to the first request message, where the first response message includes tunnel information of the TFF associated with the first task; and receiving, from the TCF, tunnel information of an access network device associated with the first task. Optionally, the tunnel for the first task includes a tunnel between the access network device associated with the first task and the TFF associated with the first task.

According to the design, the tunnel for the first task may be established between the access network device and the TCF, and at least one terminal and/or at least one TPF participating in the first task may transmit task data through the tunnel. Further, for uplink task data sent by the terminal to the TPF, the access network device only needs to forward the uplink task data to the TFF, and the access network device does not need to sense a TPF to which the uplink task data is sent, thereby simplifying complexity of the access network device. For downlink task data sent by the TPF to the access network device, the TPF only needs to forward the downlink task data to the TFF, and does not need to sense a location of the terminal, thereby simplifying complexity of the TPF.

In a design, the first request message includes an identifier of the first task and information about a task process function TPF associated with the first task. Further, the first request message further includes at least one of the following: information about a terminal associated with the first task, a data packet detection rule associated with the first task, a data packet forward action rule associated with the first task, or an identifier of the TCF.

Optionally, the first request message may further include a session identifier of the first task.

According to the design, the tunnel for the first task may be established at a granularity of a task. Alternatively, the tunnel for the first task may be established at a granularity of a session. When the tunnel for the first task is established at the granularity of the session, in addition to the foregoing content, the first request message may further include the session identifier of the first task. When the tunnel for the first task is established at the granularity of the session, a tunnel at a finer granularity may be established.

In an implementation, when receiving the first request message, the TFF may establish a tunnel context of the first task. Subsequently, the TFF routes and forwards task data of the first task based on the tunnel context of the first task. Content included in the tunnel context of the first task is similar to content included in the first request message, and mutual reference may be made between the two.

In a design, the tunnel information of the TFF includes the identifier of the first task, an internet protocol IP address of the TFF, and a tunnel endpoint identifier TEID of the TFF. The tunnel information of the access network device includes the identifier of the first task, an IP address of the access network device, and a TEID of the access network device. Optionally, when the tunnel for the first task is established at the granularity of the session, the tunnel information of the TFF and/or the tunnel information of the access network device further include/includes the session identifier of the first task.

According to the design, because the TFF may participate in routing and forwarding of a plurality of tasks, the IP address of the TFF cannot uniquely identify one task. In this embodiment of this application, when receiving the first request message, the TFF may allocate a unique identifier to the first task on a TFF side, and the unique identifier may be referred to as the TEID of the TFF. Similarly, the access network device allocates a unique identifier to the first task on an access network device side, and the unique identifier may be referred to as the TEID of the access network device. The access network device may obtain the TEID of the TFF, and the TFF may obtain the TEID of the access network device. In this case, it is considered that the tunnel for the first task is established between the access network device and the TFF, so that a dedicated tunnel is configured for the task data of the first task.

In a design, the method further includes: receiving a second request message from the TCF, where the second request message is used to request to update the terminal associated with the first task and/or the TPF associated with the first task; updating a tunnel context of the first task based on the second request message, where the tunnel context of the first task is established by the TFF when the TFF receives the first request message; and sending, to the TCF, a second response message in response to the second request message.

According to the design, the TFF may dynamically update the tunnel context of the first task based on adjustment to an executor topology, to ensure that the access network device, the TFF, and the like can correctly route and forward task data of different executors.

In a design, the second request message includes the identifier of the first task, an update reason, and information about the terminal that needs to be updated and/or information about the TPF that needs to be updated. Optionally, the second request message further includes the session identifier of the first task and/or the identifier of the TCF, and the like. The second response message includes the identifier of the first task. Optionally, the second response message further includes the session identifier of the first task and/or the identifier of the TCF.

A second aspect is a TCF end corresponding to the first aspect. For beneficial effects, refer to the descriptions of the first aspect. A method for establishing a tunnel for a task is provided. The method is executed by a TCF or a module (for example, a chip or a circuit) in the TCF. The method includes: sending a first request message to a task forward function TFF, where the first request message is used to request the TFF to establish a tunnel for a first task, and the first task is completed through collaboration of multi-dimensional resources; receiving, from the TFF, a first response message in response to the first request message, where the first response message includes tunnel information of the TFF associated with the first task; sending, to an access network device, the tunnel information of the TFF and information about a terminal associated with the first task; receiving, from the access network device, tunnel information of the access network device associated with the first task; and sending the tunnel information of the access network device to the TFF. Optionally, the tunnel for the first task includes a tunnel between the access network device associated with the first task and the TFF associated with the first task.

In a design, the first request message includes an identifier of the first task and information about a task process function TPF associated with the first task. Optionally, the first request message further includes at least one of the following: the information about the terminal associated with the first task, a data packet detection rule associated with the first task, a data packet forward action rule associated with the first task, or an identifier of a task control function TCF.

Optionally, when the tunnel for the first task is established at a granularity of a session, the first request message further includes a session identifier of the first task.

In a design, the tunnel information of the TFF includes the identifier of the first task, an internet protocol IP address of the TFF, and a tunnel endpoint identifier TEID of the TFF. The tunnel information of the access network device includes the identifier of the first task, an IP address of the access network device, and a TEID of the access network device. Optionally, when the tunnel for the first task is established at the granularity of the session, the tunnel information of the TFF and/or the tunnel information of the access network device further include/includes the session identifier of the first task.

In a design, the method further includes: The TCF sends a second request message to the TFF, where the second request message is used to request to update the terminal associated with the first task and/or the TPF associated with the first task. The TCF receives, from the TFF, a second response message in response to the second request message.

In a design, the second request message includes the identifier of the first task, an update reason, and information about the terminal that needs to be updated and/or information about the TPF that needs to be updated. Optionally, the second request message further includes the session identifier of the first task and/or the identifier of the TCF, and the like. The second response message includes the identifier of the first task. Optionally, the second response message further includes the session identifier of the first task and/or the identifier of the TCF.

In a design, when the second request message is used to request to update the terminal associated with the first task, the method further includes: The TCF sends a third request message to the access network device, where the third request message is used to request to update the terminal associated with the first task. The TCF receives, from the access network device, a third response message in response to the third request message.

In a design, the third request message includes the identifier of the first task, the update reason, and the information about the terminal that needs to be updated. Optionally, the third request message further includes the identifier of the TCF and/or the session identifier of the first task. The third response message includes the identifier of the first task. Optionally, the third response message further includes the session identifier of the first task.

A third aspect is an access network device end according to the first aspect. For beneficial effects, refer to the descriptions of the first aspect. A method for establishing a tunnel for a task is provided. The method is executed by an access network device or a module (a chip, a circuit, or the like) in the access network device. The method includes: receiving, from a task control function TCF, tunnel information of a task forward function TFF associated with a first task and information about a terminal associated with the first task, where the first task is completed through collaboration of multi-dimensional resources; and sending tunnel information of an access network device to the TCF, where the access network device is associated with a tunnel for the first task. Optionally, the tunnel for the first task includes a tunnel between the access network device associated with the first task and the TFF associated with the first task.

In a design, the tunnel information of the TFF includes the identifier of the first task, an internet protocol IP address of the TFF, and a tunnel endpoint identifier TEID of the TFF. The tunnel information of the access network device includes the identifier of the first task, an IP address of the access network device, and a TEID of the access network device. Optionally, when the tunnel for the first task is established at the granularity of the session, the tunnel information of the TFF and/or the tunnel information of the access network device further include/includes the session identifier of the first task.

In a design, the method further includes: determining a data radio bearer DRB associated with the first task; and sending information about the DRB to the terminal associated with the first task.

In a design, the method further includes: receiving a third request message from the TCF, where the third request message is used to request to update the terminal associated with the first task; updating a tunnel context of the first task based on the third request message, where the tunnel context of the first task is established when the access network device receives the tunnel information of the TFF associated with the first task and the information about the terminal associated with the first task; and sending a third response message in response to the third request message to the TCF.

In a design, the third request message includes the identifier of the first task, the update reason, and the information about the terminal that needs to be updated. Optionally, the third request message further includes the identifier of the TCF and/or the session identifier of the first task. The third response message includes the identifier of the first task. Optionally, the third response message further includes the session identifier of the first task.

According to a fourth aspect, an apparatus is provided, and the apparatus can implement the method according to the first aspect. For example, the apparatus includes a corresponding means (means) for executing the first aspect. The apparatus may be implemented by hardware, implemented by software, or implemented by hardware executing corresponding software.

In a design, the apparatus includes a unit for executing the first aspect.

In a design, the apparatus includes a processor and a memory. The processor is configured to execute a computer program or instructions stored in the memory, to enable the apparatus to implement the method according to the first aspect.

In a design, the apparatus includes a processor and an interface circuit. The interface circuit is configured to receive a signal from an apparatus other than the apparatus and transmit the signal to the processor, or send a signal from the processor to an apparatus other than the apparatus. The processor is configured to implement the method according to the first aspect by using a logic circuit or by executing code instructions.

According to a fifth aspect, an apparatus is provided, and the apparatus can implement the method according to the second aspect. For example, the apparatus includes a corresponding means (means) for executing the second aspect. The apparatus may be implemented by hardware, implemented by software, or implemented by hardware executing corresponding software.

In a design, the apparatus includes a unit for executing the second aspect.

In a design, the apparatus includes a processor and a memory. The processor is configured to execute a computer program or instructions stored in the memory, to enable the apparatus to implement the method according to the second aspect.

In a design, the apparatus includes a processor and an interface circuit. The interface circuit is configured to receive a signal from an apparatus other than the apparatus and transmit the signal to the processor, or send a signal from the processor to an apparatus other than the apparatus. The processor is configured to implement the method according to the second aspect by using a logic circuit or by executing code instructions.

According to a sixth aspect, an apparatus is provided, and the apparatus can implement the method according to the third aspect. For example, the apparatus includes a corresponding means (means) for executing the third aspect. The apparatus may be implemented by hardware, implemented by software, or implemented by hardware executing corresponding software.

In a design, the apparatus includes a unit for executing the third aspect.

In a design, the apparatus includes a processor and a memory. The processor is configured to execute a computer program or instructions stored in the memory, to enable the apparatus to implement the method according to the third aspect.

In a design, the apparatus includes a processor and an interface circuit. The interface circuit is configured to receive a signal from an apparatus other than the apparatus and transmit the signal to the processor, or send a signal from the processor to an apparatus other than the apparatus. The processor is configured to implement the method according to the third aspect by using a logic circuit or by executing code instructions.

According to a seventh aspect, a computer-readable storage medium is provided, and stores a computer program or instructions. When the computer program or the instructions are run on a computer, the computer is enabled to implement the method in any one of the first aspect to the third aspect.

According to an eighth aspect, a computer program product is provided, and includes a computer program or instructions. When the computer program or the instructions are run by a computer, the method according to any one of the first aspect to the third aspect is performed.

According to a ninth aspect, a chip is provided, and includes a processor. The processor is coupled to a memory, and is configured to execute a computer program or instructions stored in the memory, to enable the chip to implement the method according to any one of the first aspect to the third aspect.

According to a tenth aspect, a communication system is provided, including a first communication apparatus, a second communication apparatus, and a third communication apparatus. The first communication apparatus is configured to implement the method according to the first aspect, the second communication apparatus is configured to implement the method according to the second aspect, and the third communication apparatus is configured to implement the method according to the third aspect.

### BRIEF DESCRIPTION OF DRAWINGS

FIG. 1 is a diagram of an architecture of a communication system according to an embodiment of this application;
FIG. 2 is a diagram of a procedure according to an embodiment of this application;
FIG. 3 is another diagram of a procedure according to an embodiment of this application;
FIG. 4 is a diagram of a structure according to an embodiment of this application; and
FIG. 5 is a diagram of another structure according to an embodiment of this application.

### DESCRIPTION OF EMBODIMENTS

To make the objectives, technical solutions, and advantages of this application clearer, the following further describes this application in detail with reference to the accompanying drawings. Specific operation methods, function descriptions, and the like in method embodiments may also be applied to apparatus embodiments or system embodiments.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects.

Various numbers in embodiments of this application are merely used for distinguishing for ease of description and are not used to limit the scope of embodiments of this application. Sequence numbers of the foregoing processes do not mean an execution sequence, and the execution sequence of the processes should be determined based on functions and internal logic of the processes.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

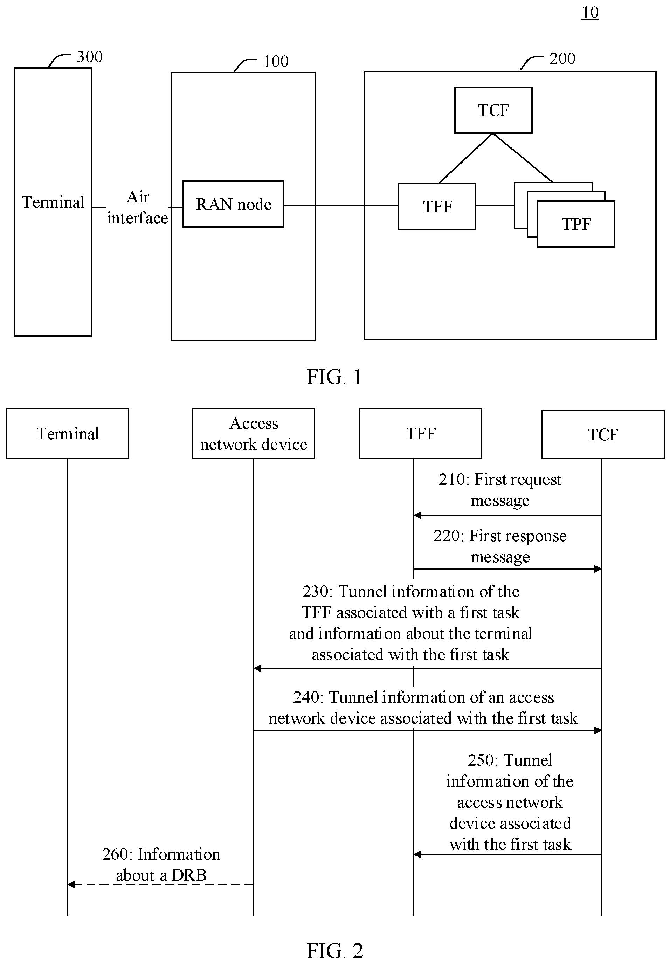

FIG. 1 is a diagram of a possible and non-limiting system. As shown in FIG. 1, a communication system 10 includes a radio access network (radio access network, RAN) 100 and a core network (core network, CN) 200.

The RAN 100 includes at least one RAN node. The terminal is connected to the RAN node in a wireless manner. The RAN node is connected to the core network 200 in a wireless or wired manner. A core network device in the core network 200 and the RAN node in the RAN 100 may be different physical devices, or may be a same physical device that integrates a logical function of the core network device and a logical function of the radio access network.

The RAN 100 may be a 3rd generation partnership project (3rd generation partnership project, 3GPP)-related cellular system, for example, a 4th generation (4th generation, 4G) mobile communication system, a 5th generation (5th generation, 5G) mobile communication system, or a future-oriented evolved system, for example, a 6th generation (6th generation, 6G) mobile communication system. The RAN 100 may alternatively be an open access network (open RAN, O-RAN, or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node may also be referred to as an access network device, a RAN entity, an access node, or the like, and forms a part of the communication system, to help the terminal implement radio access. In subsequent descriptions of this application, unless otherwise specified, an "access network device" is used for description. The RAN node and the terminal are sometimes referred to as communication apparatuses. For example, the RAN node may be understood as a communication apparatus having a base station function, and the terminal may be understood as a communication apparatus having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6G mobile communication system, a base station in a future mobile communication system, an access node in a Wi-Fi system, or the like. The RAN node may be a macro base station, a micro base station or an indoor base station, a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). All or some of functions of the RAN node in embodiments of this application may alternatively be implemented by using a software function running on hardware, or may be implemented by using a virtualization function instantiated on a platform (for example, a cloud platform). Alternatively, the RAN node in embodiments of this application may be a logical node, a logical module, or software that can implement all or some of functions of the RAN node.

In another possible scenario, a plurality of RAN nodes collaborate to assist the terminal in implementing radio access, and different RAN nodes respectively implement some functions of the base station. For example, the RAN node may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The communication system 10 may further include a terminal 300. The terminal may also be referred to as a terminal device, user equipment (user equipment, UE), a mobile station, a mobile terminal, or the like. The terminal may be widely used in various scenarios, for example, device-to-device (device-to-device, D2D) communication, vehicle-to-everything (vehicle-to-everything, V2X) communication, machine-type communication (machine-type communication, MTC), internet of things (internet of things, IOT), virtual reality (virtual reality, VR), augmented reality (augmented reality, AR), industrial control, autonomous driving, telemedicine, a smart grid, smart furniture, a smart office, a smart wearable, smart transportation, and a smart city. The terminal may be a mobile phone, a head-mounted display device, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

In a design, the core network 200 includes a task control function (task control function, TCF) and a task process function (task process function, TPF).

The TCF provides a task anchor function on a core network side, including task deployment, initiation, modification, deletion, or the like. The TPF provides a task execution function on the core network side and exchanges task data with other task executors.

In an implementation, the TCF may deploy one task to at least one terminal and/or at least one TPF for execution. The terminal and the TPF may be referred to as executors. During task execution, different executors may exchange task data. For example, task data may be exchanged between different terminals, between different TPFs, or between the terminal and the TPF. If the TPF is directly connected to the access network device, functions of the access network device and the TPF may be complex. For example, the access network device needs to sense a TPF or a terminal to which the task data sent by the terminal is sent. The TPF needs to sense a terminal or a TPF to which the task data sent by the TPF is sent. Further, for the task data sent to the terminal, the TPF further needs to sense location information of the terminal, to learn which access network device is used to send the task data to the terminal.

To reduce complexity of the access network device and the TPF and efficiently forward task data of different executors, a task forward function (task forward function, TFF) is added to the core network 200. The TFF may implement at least one of the following functions:
1. Task data forwarding. For example, task data sent by the TPF is sent to the terminal or another TPF, and task data sent by the terminal is sent to the TPF or a terminal connected to another access network device.
2. Task routing. For example, the task data is routed to a specific TPF based on an internet protocol (internet protocol, IP) address, load of the TPF, or the like.
3. Task data caching. For example, the task data sent by the terminal or the TPF is cached.
4. Maintaining (for example, creating, updating, or deleting) a context of a tunnel for a task.
5. Task data multicasting. For example, the task data sent by the terminal is copied a plurality of times, and is sent to a plurality of TPFs or a plurality of other terminals. Alternatively, the task data sent by the TPF is copied a plurality of times, and is sent to a plurality of terminals or a plurality of other TPFs.

It may be understood that quantities of TFFs, TCFs, and TPFs deployed in the core network 200 in FIG. 1 are not limited. In the diagram of FIG. 1, an example in which one TCF, one TFF, and a plurality of TPFs are deployed in the core network 200 is used for description. In addition to the description in FIG. 1, the core network 200 may further include another network element, for example, an access and mobility management function (access and mobility management function, AMF) or a session management function (session management function, SMF). This is not limited.

In a possible scenario, the TCF deploys one task to at least one terminal and at least one TPF for execution. During task execution, the task data needs to be exchanged between terminals, between the terminal and the TPF, and between TPFs. For a task, how to establish a tunnel between the access network device and the TFF is a technical problem to be resolved in this application.

In the solution of this application, the TCF may initiate a tunnel establishment request for a task to the TFF, the TFF may return tunnel information on a TFF side for the task to the TCF, and the TCF may send the tunnel information of the TFF to the access network device. The access network device returns tunnel information of the access network device for the task to the TCF, and the TCF sends the tunnel information of the access network device for the task to the TFF. In the foregoing process, the TFF may obtain the tunnel information of the access network device for the task, and the access network device may obtain the tunnel information of the TFF for the task. In this case, it is considered that a tunnel for the task is established between the TFF and the access network device.

### [Embodiment 1]

As shown in FIG. 2, a procedure is provided, and includes the following steps.

Step 210: A TCF sends a first request message to a TFF, and the TFF receives the first request message from the TCF.

In a design, the first request message is used to request the TFF to establish a tunnel for a first task, and a name of the first request message is not limited. For example, the name of the first request message may be a task tunnel establishment request, a task session establishment request, or the like.

In a design, the first task is completed through collaboration of multi-dimensional resources. For example, the terminal is located on a user side, while the TPF is located on a core network side. The terminal and the TPF have resources (such as computational power, data, and models) in different dimensions, and the terminal and the TPF may collaborate to achieve a specific objective. For example, the first task may be a distributed training task, and the TCF deploys the distributed training task to the terminal and the TPF for execution. In a first round of model training, initial models may be sent to the terminal and the TPF. The terminal and the TPF may separately train the initial models by using local data. At the end of the first round of training, the terminal and the TPF may separately send the trained models to a central node. The central node may aggregate the models sent by the terminal and the TPF to obtain an initial model for a second round of training, and then send the initial model to the terminal and the TPF again to perform the second round of model training. This process is repeated iteratively until the trained model meets a condition, and the model training ends. It may be understood that the central node may be a terminal, a TPF, or the like. This is not limited. Alternatively, the first task may be a joint inference task, and the TCF deploys the joint inference task to executors such as the terminal and the TPF for execution. For example, the TCF may divide a model into a plurality of layers, and send the layers to corresponding executors. For example, a first executor performs inference for a 1^{st} layer, and sends an inference result to a second executor. The second executor performs inference for a 2^{nd} layer based on the inference result from the first executor, and the like. This process is repeated iteratively until a last executor completes inference. An inference result of the last executor may be considered as a final inference result.

In an implementation, in a process of executing the first task, the task data may be exchanged between different terminals, between the terminal and the TPF, and between different TPFs. The task data may be data that needs to be exchanged between different executors in a process in which the executors execute the first task. For example, if two terminals are connected to a same access network device, a transmission path between the two terminals is: one terminal-the access network device-the other terminal. Alternatively, the task data may be directly transmitted between the two terminals. Alternatively, if the two terminals are connected to different access network devices, a transmission path between the two terminals is: one terminal-an access network device-another access device-the other terminal, or one terminal-an access network device-a TFF-another access network device-the other terminal. A transmission path between the terminal and the TPF is: the terminal-an access network device-a TFF-the TPF. A transmission path between two TPFs is: one TPF-a TFF-the other TPF. In this embodiment of this application, a process of establishing a tunnel between the "access network device and the TFF" is focused on. Task data may be transmitted between the access network device and the TFF by using the tunnel. A process of transmitting the task data between the terminal and the access network device and between the TFF and the TPF is not limited. For example, the terminal may send the task data to the access network device through an air interface. The TFF may determine the TPF based on an IP address, load information, or the like of the task data.

In this embodiment of this application, the tunnel that is for the first task and that is requested to be established by the first request message includes a tunnel between the access network device associated with the first task and the TFF associated with the first task. The access network device associated with the first task may be described as follows: An executor of the first task may include a terminal. That is, the terminal may execute the first task. An access network device accessed by the terminal that executes the first task may be referred to as the access network device associated with the first task. The TFF associated with the first task may be a TFF that performs routing and forwarding of the task data of the first task.

For example, in a core network, one or more TFFs may be deployed. If one TFF is deployed in the core network, the TFF performs routing and forwarding of task data of all tasks, and the TFF may be considered to be associated with all the tasks. Alternatively, if a plurality of TFFs are deployed in the core network, each TFF may be configured for a corresponding task. For example, the plurality of TFFs include a first TFF and a second TFF. The first TFF is configured to perform routing and forwarding of task data of a first task, and the second TFF is configured to perform routing and forwarding of task data of a second task. In this case, the first TFF is considered to be the TFF associated with the first task.

In an implementation, the first request message includes an identifier of the first task and information about a TPF associated with the first task. Optionally, the first request message may further include at least one of the following: information about a terminal associated with the first task, a data packet detection rule associated with the first task, a data packet forward action rule associated with the first task, an identifier of the TCF, or a session identifier of the first task.

The identifier of the first task identifies one task. The information about the TPF associated with the first task may be information about a TPF that executes the first task, for example, information such as an identifier or an address of the TPF that executes the first task. The information about the terminal associated with the first task may be information about a terminal that executes the first task, for example, information such as an identifier or an address of the terminal that executes the first task. The data packet detection rule (packet detection rule, PDR) associated with the first task is a PDR corresponding to the TFF when the TFF performs routing and forwarding on a data packet of the first task. The data packet forward action rule (forward action rule, FAR) associated with the first task is an FAR corresponding to the TFF when the TFF performs routing and forwarding on the data packet of the first task. For example, one PDR is associated with one FAR. When receiving one data packet, the TFF matches a PDR corresponding to the data packet based on a destination IP address and a task identifier carried in the data packet. Further, an FAR corresponding to the data packet is matched based on an FAR associated with the PDR. The FAR may indicate a forward rule (for example, forwarding, buffering, or discarding) of the data packet and a parameter (for example, a destination interface or an encapsulation parameter) corresponding to a forwarding operation. It should be noted that, for a downlink data packet, the encapsulation parameter may be an encapsulation parameter of a general packet radio service tunneling protocol user plane (general packet radio service tunneling protocol user plane, GTP-U). The identifier of the TCF identifies the TCF. The first task may include one or more sessions, and the session identifier of the first task identifies one session of the first task. In other words, the first task may correspond to an identifier of one first task, or may correspond to session identifiers of one or more first tasks.

It may be understood that a tunnel for the first task may be established at a granularity of a task. For example, one tunnel is established for the first task. The first task may include one or more sessions. When the first task includes a plurality of sessions, the plurality of sessions use one tunnel. Alternatively, the tunnel for the first task may be established at a granularity of a session. For example, when the first task includes one session, one tunnel is established for the session of the first task. Alternatively, when the first task includes a plurality of sessions, a corresponding tunnel is established for each session. Each session uses a corresponding tunnel to transmit task data. In an implementation, when the tunnel for the first task is established at the granularity of the task, the first request message includes the identifier of the first task and the information about the TPF associated with the first task. Optionally, the first request message may further include at least one of the following: the information about the terminal associated with the first task, the data packet detection rule associated with the first task, the data packet forward action rule associated with the first task, or the identifier of the TCF. Alternatively, when the tunnel for the first task is established at the granularity of the session, in addition to the foregoing content, the first request message may further include the session identifier of the first task.

In a design, when receiving the first request message from the TCF, the TFF may establish a tunnel context of the first task. The tunnel context of the first task includes at least one of the following: the identifier of the first task, the information about the TPF associated with the first task, the information about the terminal associated with the first task, the data packet detection rule associated with the first task, the data packet forward action rule associated with the first task, or the identifier of the TCF. Further, when the tunnel for the first task is established at the granularity of the session, the tunnel context of the first task may further include the session identifier of the first task.

Step 220: The TFF sends a first response message to the TCF, and the TCF receives the first response message from the TFF.

In a design, the first response message is a response to the first request message, or the first response message is referred to as a response in response to the first request message. A name of the first response message is not limited. For example, a name of the first response message may be a task tunnel establishment response, a task session establishment response, or the like.

In an implementation, the first response message includes tunnel information of the TFF associated with the first task. The tunnel information of the TFF associated with the first task includes the identifier of the first task, an IP address of the TFF, and a tunnel endpoint identifier (tunnel endpoint identifier, TEID) of the TFF. In an implementation, the TFF routes and forwards task data for executors of a plurality of tasks. Therefore, the IP address of the TFF cannot uniquely identify one tunnel. When receiving the first request message, the TFF may allocate a unique identifier to the tunnel for the first task. The identifier may uniquely identify the tunnel for the first task on the TFF side, and the identifier is the foregoing TEID. Further, the tunnel information associated with the first task may further include the session identifier of the first task.

Step 230: The TCF sends, to the access network device, the tunnel information of the TFF associated with the first task and the information about the terminal associated with the first task. The access network device receives, from the TCF, the tunnel information of the TFF and the information about the terminal associated with the first task.

Step 240: The access network device sends tunnel information of the access network device to the TCF. The TCF receives the tunnel information of the access network device from the access network device.

In a design, the tunnel information of the access network device includes the identifier of the first task, an IP address of the access network device, and a TEID of the access network device. When receiving the tunnel information of the TFF associated with the first task and the information about the terminal associated with the first task in step 230, the access network device may allocate, on an access network device side, a unique identifier to the tunnel for the first task. The identifier is the TEID of the access network device. Further, the tunnel information of the access network device further includes the session identifier of the first task.

Step 250: The TCF sends, to the TFF, the tunnel information of the access network device associated with the first task.

In a design, the information about the terminal associated with the first task in step 230 may be information about the terminal that executes the first task. It may be understood that the terminal that executes the first task may be connected to a same access network device, or may be connected to a plurality of access network devices. In an implementation, if the terminal that executes the first task is connected to an access network device, the TCF sends both the tunnel information of the TFF and the information about the terminal associated with the first task to the access network device, so that the access network device can obtain the tunnel information of the TFF. In addition, the access network device may send tunnel information of the access network device to the TCF, and the TCF forwards the tunnel information of the access network device to the TFF, so that the TFF may obtain the tunnel information of the access network device. In this case, it may be considered that the tunnel for the first task is established between the TFF and the access network device. In another implementation, if the terminal that executes the first task is connected to a plurality of access network devices, a process of step 230 to step 250 needs to be performed for each access network device. In other words, the TCF needs to send the tunnel information of the TFF and the information about the terminal associated with the first task to each access network device. Each access network device also needs to send its own tunnel information of the access network device to the TCF, and the TCF forwards the tunnel information of each access network device to the TFF, so that the TFF can obtain the tunnel information of each access network device. In this case, it may be considered that a tunnel for the first task is established between the TFF and each access network device. A difference is that in this implementation, the information that is about the terminal associated with the first task and that is sent by the TCF to the access network device is no longer information about all terminals associated with the first task, but may be information about some terminals associated with the first task. For example, the terminal associated with the first task is connected to two access network devices. That is, the terminal that executes the first task is connected to two access network devices. In step 230, the TCF sends, to one access network device, the tunnel information of the TFF and information about a terminal connected to the access network device. The TCF sends, to another access network device, the tunnel information of the TFF, information about a terminal connected to the another access network device, and the like.

In an implementation, the TCF may deploy the first task to a plurality of terminals and a plurality of TPFs. In a design, if the plurality of terminals are connected to a same access network device, and the plurality of TPFs are connected to a same TFF, according to a procedure in FIG. 2, the access network device may obtain the tunnel information of the TFF, the TFF may obtain the tunnel information of the access network device, and the tunnel for the first task may be established between the access network device and the TFF. Alternatively, in a design, if the plurality of terminals are connected to a same access network device, and the plurality of TPFs are connected to different TFFs, according to a procedure in FIG. 2, the access network device may obtain tunnel information of each TFF, each TFF may obtain the tunnel information of the access network device, and the tunnel for the first task may be established between the access network device and each TFF. Alternatively, in a design, if the plurality of terminals are connected to different access network devices, and the plurality of TPFs are connected to a same TFF, according to a procedure in FIG. 2, each access network device may obtain the tunnel information of the TFF, the TFF may obtain tunnel information of each access network device, and the tunnel for the first task may be established between each access network device and the TFF. Alternatively, in a design, if the plurality of terminals are connected to different access network devices, and the plurality of TPFs are connected to different TFFs, according to a procedure in FIG. 2, each access network device obtains tunnel information of each TFF, each TFF obtains tunnel information of each access network device, and the tunnel for the first task is established between each access network device and each TFF.

Further, after step 230, the method further includes step 260: The access network device determines a data radio bearer (data radio bearer, DRB) associated with the first task, and sends information about the DRB to the terminal associated with the first task.

In an implementation, the information about the DRB includes an identifier of the DRB and the identifier of the first task. Further, the information about the DRB further includes: the identifier of the TCF and/or the session identifier of the first task. In an implementation, the DRB associated with the first task is used to transmit the task data of the first task. For example, in downlink transmission, the access network device may send the task data of the first task to the terminal by using the DRB associated with the first task. During uplink transmission, the terminal may send the task data of the first task to the access network device by using the DRB associated with the first task. The DRB associated with the first task may be referred to as a task data radio bearer (task data radio bearer, T-DRB).

By performing step 210 to step 260, the tunnel for the first task may be established between the access network device and the TFF. The tunnel is used to transmit the task data of the first task. The task data of the first task may be transmitted between the access network device and the TFF through the tunnel for the first task. In a design, the access network device and the TFF may route and forward a task data packet of the first task based on the tunnel context of the first task. For example, the TCF sends, to the access network device, the FAR associated with the first task. The tunnel context that is of the first task and that is established by the access network device includes the identifier of the first task, the information about the terminal associated with the first task, or the FAR associated with the first task. Further, the tunnel context of the first task may further include: the identifier of the TCF and/or a session identifier of the tunnel for the first task. For a process in which the TFF establishes the tunnel context of the first task, refer to the foregoing descriptions.

In a design, when the TFF receives one data packet, if the TFF receives the data packet from the access network device, the TFF may determine, based on the TEID that is of the access network device and that is carried in a GTP-U header of the data packet, a task corresponding to the data packet. Alternatively, if the TFF receives a data packet from the TPF, the TFF may determine, based on a task identifier carried in the data packet, a task corresponding to the data packet. The TFF matches, based on a destination IP address carried in the data packet, a corresponding PDR in a tunnel context corresponding to the task. In an implementation, as shown in Table 1, attributes of the PDR include parameters such as an identifier of the PDR, a precedence parameter, packet detection information, and an FAR identifier. The packet detection information includes parameters such as a source interface, a destination IP address, a network instance, and a task identifier.

**Table 1: Attributes of the PDR**

| | |
|---|---|
| Identifier of the PDR | |
| Precedence (precedence) parameter | |
| Packet detection information (packet detection information) | Source interface (source interface) |
| | Destination IP address (destination IP address) |
| | Network instance (network instance) |
| | Task identifier (task identifier) |
| FAR identifier | |

The attributes of the PDR in Table 1 include an FAR identifier, and an FAR corresponding to the FAR identifier is the FAR associated with the PDR. The FAR may indicate an operation rule (for example, forwarding, buffering, or discarding) corresponding to the data packet and a parameter (for example, a destination interface or an encapsulation parameter) corresponding to forwarding. In an implementation, the TFF may specifically match, based on a destination IP address carried in the data packet, a corresponding PDR in the destination IP address included in the packet detection information in the attributes of the PDR. Then, the TFF forwards, buffers, or discards the data packet according to the operation rule indicated by the FAR associated with the PDR. When forwarding the data packet, the TFF may forward the data packet to the access network device, the TPF, or the like. When forwarding the data packet to the access network device, the TFF may encapsulate the data packet based on the encapsulation parameter indicated by the FAR. Optionally, the encapsulation parameter indicated by the FAR may be referred to as an outer encapsulation header creation (outer header creation) parameter, and the encapsulation parameter may be an encapsulation parameter of the GTP-U.

In a design, when receiving one data packet, the access network device first identifies a task corresponding to the data packet. If the data packet is received by the access network device from the terminal, the access network device may determine a task corresponding to the data packet, based on a DRB that carries the data packet, a task identifier carried in the data packet, or the like. Alternatively, if the data packet is received by the access network device from the TPF by using the TFF, the access network device may determine, based on the TEID that is of the TFF and that is carried in the data packet, the task corresponding to the data packet. The TEID is associated with or bound to the task. The TEID of the TFF varies for different tasks. Therefore, the access network device may determine, based on the TEID that is of the TFF and that is carried in the data packet, the task corresponding to the data packet. Then, the access network device parses the destination IP address in the data packet, and matches an FAR corresponding to the destination IP address. The access network device performs an operation on the data packet based on the FAR.

For example, the terminal sends an IP data packet of the first task to the access network device. A source IP address of the IP data packet is an IP address of the terminal, and a destination IP address of the IP data packet is an IP address of the TPF. The access network device may match a corresponding FAR in the tunnel context of the first task based on the destination IP address of the IP data packet. If the destination interface corresponding to the forwarding parameter in the FAR corresponds to the TPF, the access network device sends the IP data packet to the TFF. When receiving the IP data packet, the TFF matches a corresponding PDR and FAR in the tunnel context of the first task. If the destination interface in the forwarding parameter corresponding to the FAR is a specific TPF, the TFF sends the IP data packet to the corresponding TPF; or the TFF may directly send the IP data packet to the corresponding TPF based on the destination IP address carried in the IP data packet.

It may be understood that the PDR and the FAR may be configured at a granularity of a task. That is, corresponding PDRs and FARs may be configured for different tasks. Different tasks correspond to different PDRs and FARs. Further, a plurality of PDRs and FARs may be configured for one task. For example, a corresponding PDR and FAR are configured for the task data sent by the terminal to the TPF. A corresponding PDR and FAR are configured for the task data sent by the terminal to another terminal. A corresponding PDR and FAR are configured for the task data sent by the TPF to the terminal. A corresponding PDR and FAR are configured for the task data sent by the TPF to another TPF, and the like. In an implementation, the TCF may configure the PDR and the FAR for the TFF, for example, by using the first request message. This is not limited.

For example, the terminal sends a first data packet. The first data packet carries task data associated with the first task. The terminal sends the first data packet to the access network device through an air interface, and the access network device may forward the first data packet to the TFF. The TFF matches, based on the destination IP address carried in the first data packet and the identifier of the first task, a PDR corresponding to the first data packet. The PDR includes an identifier of the FAR associated with the PDR. The TFF performs a corresponding operation on the first data packet according to a forward rule indicated by the FAR associated with the PDR and/or a parameter corresponding to the forwarding operation, and the like. For example, when the forward rule indicated by the FAR is forwarding, the first data packet is sent, based on the destination interface included in the parameter corresponding to the forwarding operation, to a device corresponding to the destination interface. When the device corresponding to the destination interface is an access network device, the TFF sends the first data packet to the corresponding access network device. When receiving the first data packet, the corresponding access network device may send the first data packet to a corresponding terminal. In this case, it may be considered that the two terminals exchange task data. Alternatively, when the device corresponding to the destination interface is a TPF, the TFF sends the first data packet to the TPF. In this case, it is considered that the terminal exchanges the task data with the TPF. Certainly, if the forward rule indicated by the FAR is buffering or discarding, the TFF buffers the first data packet, discards the first data packet, or the like.

For example, the TPF sends a second data packet. The second data packet includes the task data associated with the first task. The TPF sends the second data packet to the TFF. The TFF matches, based on a destination IP address carried in the second data packet and the identifier of the first task, a PDR corresponding to the second data packet. The TFF performs a corresponding operation on the second data packet according to a forward rule indicated by the FAR associated with the PDR and/or a parameter corresponding to the forwarding operation. For example, when the forward rule indicated by the FAR is forwarding, the second data packet is sent to a corresponding device based on the destination interface in the parameter corresponding to the forwarding operation. For example, when the device corresponding to the destination interface is a TPF, the TFF sends the second data packet to the corresponding TPF. In this case, it is considered that the two TPFs exchange task data. Alternatively, when the device corresponding to the destination interface is an access network device, the TFF sends the second data packet to the access network device, and the access network device sends the second data packet to the terminal. In this case, it is considered that the TPF exchanges the task data with the terminal.

It can be seen that, regardless of whether service data is sent by the terminal or by the TPF, a destination interface in an FAR corresponding to the service data varies depending on different destination ends corresponding to the service data. In other words, an example in which the terminal sends the service data is used, and a corresponding PDR and FAR need to be configured for task data sent by the terminal to another terminal and the TPF. An example in which the TPF sends the service data is used, and a corresponding PDR and FAR need to be configured for service data sent by the TPF to another TPF and the terminal.

Further, in an implementation, when receiving a data packet that is sent by the terminal and that carries task data, the access network device may perform the following operation on the data packet: sending the data packet to another terminal of a current access network device, or sending the data packet to another access network device, and the another access network device sends the data packet to a terminal connected to the another access network device. In this case, it may be considered that the two terminals exchange the task data. Alternatively, the access network device may send a data packet to the TFF, and the TFF sends the data packet to the TPF. In this case, it may be considered that the terminal exchanges task data with the TPF. Alternatively, the TFF sends the data packet to another access network device, and the another access network device sends the data packet to a terminal connected to the TFF. In this case, it is also considered that the two terminals exchange task data. In an implementation, an FAR may be configured for the access network device. For example, the TCF configures an FAR for the access network device, and the access network device determines to send a data packet to the TFF, the terminal, or another access network device.

According to the design, a tunnel for a specific task may be established between the access network device and the TFF, at least one terminal and/or at least one TPF participating in the task may share the tunnel for the task, and task data may be exchanged through the shared tunnel for the task. Further, for uplink task data sent by the terminal to the TPF, the access network device only needs to forward the uplink task data to the TFF, and the access network device does not need to sense a TPF to which the uplink task data is sent, thereby simplifying complexity of the access network device. For downlink task data sent by the TPF to the access network device, the TPF only needs to forward the downlink task data to the TFF, and does not need to sense a location of the terminal, thereby simplifying complexity of the TPF.

### [Embodiment 2]

According to Embodiment 1, the tunnel for the first task may be established between the access network device and the TFF, and different executors may exchange the task data of the first task through the tunnel. When the condition is met, the TCF may update the executor, and such updates include but are not limited to replacement, addition, deletion, or the like. The foregoing condition includes at least one of the following: A battery level is lower than a first threshold, load is higher than a second threshold, the terminal moves, or the like. When the executor is updated, the tunnel context of the first task also needs to be updated.

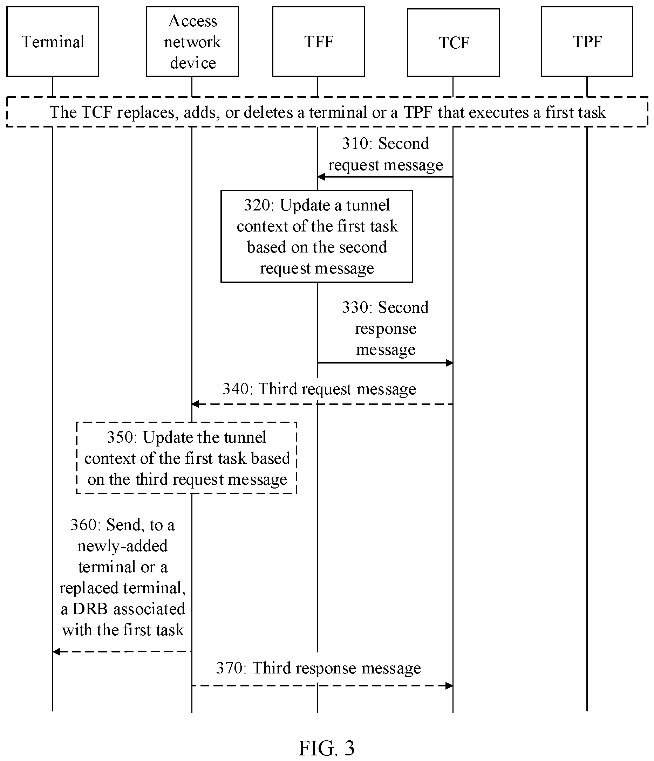

As shown in FIG. 3, a procedure is provided, and includes the following steps.

Step 310: A TCF sends a second request message to a TFF, and the TFF receives the second request message from the TCF.

In a design, the second request message is used to request to update a terminal associated with a first task and/or a TPF associated with the first task. A name of the second request message is not limited. For example, the name of the second request message may be a task tunnel update request, a task session update request, or the like.

In an implementation, the second request message may include an identifier of the first task, an update reason, information about a terminal that needs to be updated and/or information about a TPF that needs to be updated, and the like. The update reason may include at least one piece of the following information: adding a terminal, adding a TPF, deleting a terminal, deleting a TPF, replacing a terminal, replacing a TPF, or the like. The information about the terminal that needs to be updated and/or the information about the TPF that needs to be updated may be an identifier or an address of the terminal that needs to be updated and/or an identifier or an address of the TPF that needs to be updated. Further, the second request message further includes a session identifier of the first task and/or an identifier of the TCF, and the like.

Step 320: The TFF updates a tunnel context of the first task based on the second request message, where the tunnel context of the first task is established by the TFF when the TFF receives a first request message.

In a design, the TFF may update the tunnel context of the first task based on content included in the second request message. For example, the TFF may determine, based on the identifier of the first task included in the second request message, a tunnel context corresponding to the first task, namely, the tunnel context of the first task. Certainly, if the tunnel for the first task is established at a granularity of a session, a session identifier of the first task further needs to be considered. That is, if a tunnel is established for each session, the TFF may determine the tunnel context of the first task based on the identifier of the first task and the session identifier of the first task. In an implementation, the tunnel context of the first task includes at least one of the following: the identifier of the first task, information about the TPF associated with the first task, information about the terminal associated with the first task, a data packet detection rule associated with the first task, a data packet forward action rule associated with the first task, or the identifier of the TCF. Further, the tunnel context of the first task further includes the session identifier of the first task. If the update reason in the second request message is adding the terminal and/or adding the TPF, the TFF adds information about a newly-added terminal and/or information about a newly-added TPF to the information about the terminal associated with the first task and/or the information about the TPF associated with the first task. Alternatively, if the update reason in the second request message is deleting the terminal and/or deleting the TPF, the corresponding terminal and/or TPF are/is deleted from the information about the terminal associated with the first task and/or the information about the TPF associated with the first task. Alternatively, if the update reason in the second request message is replacing the terminal and/or replacing the TPF, information about the corresponding terminal and/or TPF is replaced in the terminal associated with the first task and/or the TPF associated with the first task, and the like.

Step 330: The TFF sends a second response message to the TCF, and the TCF receives the second response message from the TFF.

In a design, the second response message is a response to the second request message, or the second response message is referred to as a response in response to the second request message. A name of the second response message is not limited. For example, the name of the second response message may be a task tunnel update response, a task session update response, or the like. The second response message includes the identifier of the first task. Further, the second response message further includes the session identifier of the first task and/or the identifier of the TCF.

In a scenario, if the second request message is used to request to update the terminal associated with the first task, the method further includes the following step.

Step 340: The TCF sends a third request message to an access network device, and the access network device receives the third request message from the TCF.

In a design, the third request message is used to request to update the terminal associated with the first task, and a name of the third request message is not limited. For example, the name of the third request message may be a task tunnel update request, a task session update request, or the like. The third request message may include the identifier of the first task, the update reason, and the information about the terminal that needs to be updated. Optionally, the third request message further includes the identifier of the TCF and/or the session identifier of the first task.

Step 350: The access network device updates the tunnel context of the first task based on the third request message.

For example, the access network device may determine, based on the identifier that is of the first task and that is included in the third request message, a tunnel context corresponding to the first task, namely, the tunnel context of the first task. The tunnel context of the first task includes at least the information about the terminal associated with the first task. The access network device may update, based on the update reason, the information about the terminal that needs to be updated, and the like that are included in the third request message, the information that is about the terminal associated with the first task and that is included in the tunnel context of the first task. This is similar to a process in which the TFF updates the tunnel context of the first task. If the update reason is that a terminal is added, information such as an identifier or an address of the newly-added terminal is added to the information about the terminal associated with the first task, for example, added to an identifier list or an address list of the terminal associated with the first task. Alternatively, if the update reason is that a terminal is deleted, information about the corresponding terminal is deleted from the information about the terminal associated with the first task. For example, in the identifier list or the address list of the terminal associated with the first task, an identifier, an address, or the like of the corresponding terminal is deleted. Alternatively, if the update reason is that a terminal is replaced, information about the corresponding terminal is replaced with information about a new terminal in the information about the terminal associated with the first task. For example, in the identifier list or the address list of the terminal associated with the first task, an identifier, an address, or the like of the corresponding terminal is replaced.

Step 360: The access network device updates, based on the information about the terminal that needs to be updated, a DRB associated with the first task.

For example, if the access network device adds a terminal or replaces a terminal, the access network device needs to configure the DRB associated with the first task for the newly-added or the replaced terminal. In addition, in step 360, the access network device sends, to the newly-added terminal or the replaced terminal, information about the DRB associated with the first task. Alternatively, if the access network device deletes a terminal, the access network device may delete a DRB that is associated with the first task and that is configured for the terminal. Further, the access network device may send a notification message to the terminal, to notify the terminal that the DRB associated with the first task has been deleted, and the like.

Step 370: The access network device sends a third response message to the TCF, and the TCF receives the third response message from the access network device.

In a design, the third response message is a response to the third request message, or the third response message is referred to as a response in response to the third request message. A name of the third response message is not limited. For example, the name of the third response message may be a task tunnel update response, a task session update response, or the like. The third response message includes the identifier of the first task. Further, the third response message further includes the session identifier of the first task.

According to the design, the TFF may dynamically update the tunnel context of the first task based on adjustment to an executor topology, to ensure that the access network device, the TFF, and the like can correctly route and forward task data of different executors, and ensure efficient exchange of task data between different executors.

It may be understood that, in this embodiment of this application:
1. The description focuses on differences between different procedures, and descriptions of different procedures may refer to one another.
2. In the procedures in FIG. 2 and FIG. 3, a sequence of different steps is not limited, for example, a sequence of step 250 and step 260 in FIG. 2. In addition, each procedure may include fewer steps or more steps than the schematic flowchart or the text description.
3. In the procedures in FIG. 2 and FIG. 3, the TCF, the TFF, the access network device, and the terminal are used as execution bodies for description. It may be understood that, in each procedure, a function of the TCF may be implemented by the TCF, or may be implemented by a module (for example, a chip or a circuit) in the TCF. A function of the TFF may be implemented by the TFF, or may be implemented by a module in the TFF. A function of the access network device may be implemented by the access network device, or may be implemented by a module in the access network device, or may be implemented by a logical node, a logical module, or software that can implement all or some functions of the access network device. A function of the terminal may be implemented by the terminal, or may be implemented by a module in the terminal.
4. In this embodiment of this application, the expression "(for example, a TFF) receiving a message from (for example, a TCF)" may be understood as that a source end of the message is the TCF and that a destination end of the message is the TFF, which may include a case in which the TFF may directly or indirectly receive the message from the TCF. A message may undergo necessary processing, for example, a format change, between a source end for sending the message and a destination end. However, the destination end may understand valid information from the source end. A similar expression in this application may be understood similarly, and details are not described herein again.

In the foregoing embodiments provided in this application, the methods provided in embodiments of this application are described from a perspective of interaction between devices. To implement functions in the methods provided in embodiments of this application, the TFF, the TCF, the access network device, and the like may include a hardware structure and/or a software module, to implement the foregoing functions in a form of a hardware structure, a software module, or a combination of the hardware structure and the software module. Whether a function in the foregoing functions is performed by using the hardware structure, the software module, or the combination of the hardware structure and the software module depends on design constraints of particular applications of the technical solutions.

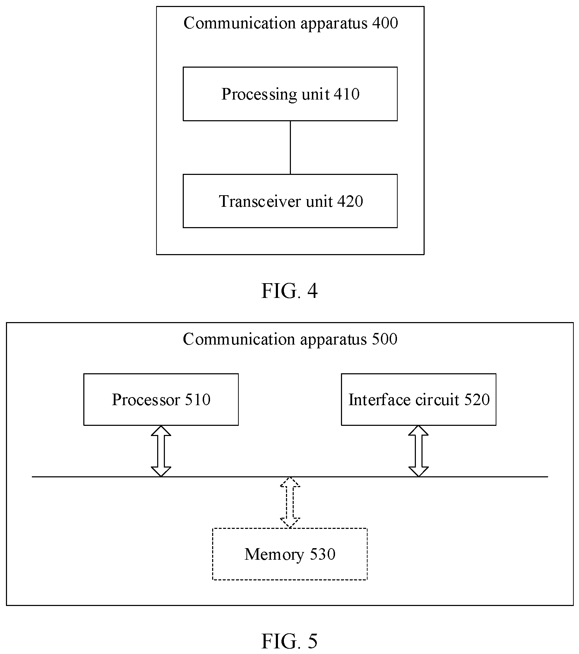

FIG. 4 and FIG. 5 are diagrams of structures of possible apparatuses according to embodiments of this application. These communication apparatuses may implement one or more corresponding functions in the foregoing method embodiments. For example, a function implemented by the TFF, the TCF, the access network device, or the like may implement beneficial effects of the foregoing method embodiments.

As shown in FIG. 4, a communication apparatus 400 includes a processing unit 410 and a transceiver unit 420.

For example, the processing unit 410 may also be referred to as a processor, a processing board, a processing module, a processing apparatus, or the like. The transceiver unit 420 may also be referred to as a transceiver, a transceiver machine, a transceiver module, a transceiver apparatus, a communication unit, or the like. Further, the transceiver unit 420 may include at least one of a sending unit or a receiving unit. The sending unit and the receiving unit may be integrated together, or may be two independent units, or the like.

In a design, the communication apparatus 400 is configured to implement functions of the TFF in FIG. 2 and FIG. 3. An example in which a function of the TFF in FIG. 2 is implemented is used. Specifically:

The transceiver unit 420 is configured to receive a first request message from a task control function TCF. The first request message is used to request a task forward function TFF to establish a tunnel for a first task, and the first task is completed through collaboration of multi-dimensional resources. The processing unit 410 is configured to generate a first response message. The transceiver unit 420 is further configured to send, to the TCF, the first response message in response to the first request message. The first response message includes tunnel information of a TFF associated with the first task. The transceiver unit 420 is further configured to receive, from the TCF, tunnel information of an access network device associated with the first task.

In a design, the communication apparatus 400 is configured to implement functions of the TCF in FIG. 2 and FIG. 3. For example, a function of the TCF in FIG. 2 is implemented. Specifically:

The processing unit 410 is configured to generate a first request message. The transceiver unit 420 is configured to send the first request message to a task forward function TFF. The first request message is used to request the TFF to establish a tunnel for a first task, and the first task is completed through collaboration of multi-dimensional resources. The transceiver unit 420 is further configured to receive, from the TFF, a first response message in response to the first request message. The first response message includes tunnel information of the TFF associated with the first task. The transceiver unit 420 is further configured to send, to an access network device, the tunnel information of the TFF and information about a terminal associated with the first task. The transceiver unit 420 is further configured to receive, from the access network device, tunnel information of the access network device associated with the first task. The transceiver unit 420 is further configured to send the tunnel information of the access network device to the TFF.

In a design, the communication apparatus 400 is configured to implement functions of the access network device in FIG. 2 and FIG. 3. For example, a function of the access network device in FIG. 2 is implemented. Specifically:
The transceiver unit 420 is configured to receive, from a task control function TCF, tunnel information of a task forward function TFF associated with a first task and information about a terminal associated with the first task. The first task is completed through collaboration of multi-dimensional resources. The processing unit 410 is configured to generate tunnel information of an access network device. The transceiver unit 420 is further configured to send the tunnel information of the access network device to the TCF. The access network device is associated with a tunnel for the first task.

In an implementation, when the access network device uses an O-RAN architecture, the processing unit 410 may be located on an O-CU entity, and the transceiver unit 420 may be located on an O-DU entity or an O-RU entity. Optionally, when the O-CU entity includes an O-CU-CP entity, the processing unit 410 may be located on an O-CU-CP entity. Alternatively, the processing unit 410 is located on the O-DU entity, and the transceiver unit 420 is located on the O-RU entity. Alternatively, both the processing unit 410 and the transceiver unit 420 are located on the O-DU entity, the O-RU entity, or the like. This is not limited.

For more detailed descriptions of the processing unit 410 and the transceiver unit 420, refer to the descriptions of FIG. 2 or FIG. 3 in the foregoing method embodiments. Details are not described herein again.

It may be understood that, in embodiments of this application, division into the units is an example, and is merely logical function division. In practical implementation, another division manner may be used. In addition, functional units in embodiments of this application may be integrated into one physical device (for example, a processor), or each functional unit may be an independent physical device, or two or more units may be integrated into one unit for implementation. The integrated unit may be implemented in a form of hardware, or implemented in a form of a software functional module, or the like.

FIG. 5 is a diagram of another structure of a communication apparatus 500 according to an embodiment of this application. For example, the communication apparatus 500 shown in FIG. 5 may be an implementation of a hardware circuit of the communication apparatus 400 shown in FIG. 4. For ease of description, FIG. 5 shows only a main part of the communication apparatus.

As shown in FIG. 5, the communication apparatus 500 includes a processor 510 and an interface circuit 520. The processor 510 and the interface circuit 520 are coupled to each other.

For example, the processor 510 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like. The interface circuit 520 may be a transceiver, an input/output circuit, or the like.

Optionally, the communication apparatus 500 may further include a memory 530 configured to store instructions executed by the processor 510, store input data required by the processor 510 to run instructions, or store data generated after the processor 510 runs instructions. For example, the instruction may also be referred to as a computer program, computer program code, or the like.

For example, the memory 530 may be a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a compact disc read-only memory (compact disc read-only memory, CD-ROM), or any other form of storage medium well-known in the art.

When the communication apparatus 500 is configured to implement a function of the TFF, the TCF, or the access network device in FIG. 2 or FIG. 3, the processor 510 is configured to implement a function of the processing unit 410, and the interface circuit 520 is configured to implement a function of the transceiver unit 420.

In a design, the interface circuit 520 is configured to receive a signal from a communication apparatus other than the communication apparatus 500 and transmit the signal to the processor 510, or send a signal from the processor 510 to a communication apparatus other than the communication apparatus. The processor 510 is configured to implement a function of the TFF, the TCF, or the access network device in FIG. 2 or FIG. 3 by using a logic circuit or by executing code instructions.

An embodiment of this application provides a communication apparatus, including a processor and a memory. The processor is coupled to the memory, and the processor is configured to implement a function of the TFF, the TCF, or the access network device in FIG. 2 or FIG. 3. For example, the processor may execute instructions in the memory, so that the communication apparatus implements one or more functions in the foregoing method embodiments, for example, a function implemented by the TFF, the TCF, or the access network device in FIG. 2. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the TFF, the TCF, or the access network device in FIG. 2 or FIG. 3. Alternatively, the processor and the storage medium may exist as discrete components in the TFF, the TCF, the access network device, or the like in FIG. 2 or FIG. 3.

An embodiment of this application further provides a computer-readable storage medium. The computer-readable storage medium stores instructions, and the instruction may also be referred to as a computer program, computer program code, or the like. The instructions are run on a computer, so that the computer performs a function of the TFF, the TCF, or the access network device in FIG. 2 or FIG. 3 in the foregoing method embodiments.

Optionally, the computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include both the volatile storage medium and the non-volatile storage medium.

An embodiment of this application provides a computer program product, including a computer program or instructions. When the computer program or the instruction are run on a computer, the method of the TFF, the TCF, or the access network device in FIG. 2 or FIG. 3 is performed. For example, the computer program product includes one or more computer programs or instructions. When the computer program or the instructions are loaded and executed on a computer, the procedures or functions of the TFF, the TCF, or the access network device in FIG. 2 or FIG. 3 in embodiments of this application are completely or partially performed.

It may be understood that all or some of the methods provided in embodiments of this application may be implemented by using software, hardware, firmware, or any combination thereof. When software is used to implement embodiments, the foregoing embodiments may be implemented completely or partially in a form of a computer program product.

An embodiment of this application provides a chip. The chip includes a processor. The processor is coupled to a memory. The processor is configured to execute a computer program or instructions stored in the memory, so that the chip implements a function of the TFF, the TCF, or the access network device in FIG. 2 or FIG. 3. For example, the chip implements a function of the access network device. The chip may receive information from another module (for example, a radio frequency or an antenna) in the access network device, and the information may be sent by a TCF to the access network device. Alternatively, the access network device may send information to another module (for example, a radio frequency or an antenna) in the access network device. The information is sent by the access network device to a TCF.

An embodiment of this application provides a communication system, including a first communication apparatus and a second communication apparatus.

The first communication apparatus may implement a function of the TFF in FIG. 2 or FIG. 3. The second communication apparatus may implement a function of the TCF in FIG. 2 or FIG. 3. Further, the communication system further includes a third communication apparatus. The third communication apparatus may implement a function of the access network device in FIG. 2 or FIG. 3. For a specific structure of the TFF, the TCF, or the access network device, refer to the foregoing descriptions, for example, the structure description in FIG. 4 or FIG. 5.

## Claims

1. A method for establishing a tunnel for a task, comprising:
receiving a first request message from a task control function TCF, wherein the first request message is used to request a task forward function TFF to establish a tunnel for a first task, and the first task is completed through collaboration of multi-dimensional resources;
sending, to the TCF, a first response message in response to the first request message, wherein the first response message comprises tunnel information of the TFF associated with the first task; and
receiving, from the TCF, tunnel information of an access network device associated with the first task.

2. The method according to claim 1, wherein the tunnel for the first task comprises a tunnel between the access network device associated with the first task and the TFF associated with the first task.

3. The method according to claim 1 or 2, wherein the first request message comprises an identifier of the first task and information about a task process function TPF associated with the first task.

4. The method according to claim 3, wherein the first request message further comprises at least one of the following: information about a terminal associated with the first task, a data packet detection rule associated with the first task, a data packet forward action rule associated with the first task, or an identifier of the TCF.

5. The method according to any one of claims 1 to 4, wherein the tunnel information of the TFF comprises the identifier of the first task, an internet protocol IP address of the TFF, and a tunnel endpoint identifier TEID of the TFF.

6. The method according to any one of claims 1 to 5, wherein the tunnel information of the access network device comprises the identifier of the first task, an IP address of the access network device, and a TEID of the access network device.

7. The method according to any one of claims 1 to 6, further comprising:
receiving a second request message from the TCF, wherein the second request message is used to request to update the terminal associated with the first task and/or the TPF associated with the first task;
updating a tunnel context of the first task based on the second request message, wherein the tunnel context of the first task is established by the TFF when the TFF receives the first request message; and
sending, to the TCF, a second response message in response to the second request message.

8. The method according to claim 7, wherein the second request message comprises the identifier of the first task, an update reason, and information about the terminal that needs to be updated and/or information about the TPF that needs to be updated.

9. The method according to claim 7 or 8, wherein the second response message comprises the identifier of the first task.

10. A method for establishing a tunnel for a task, comprising:
sending a first request message to a task forward function TFF, wherein the first request message is used to request the TFF to establish a tunnel for a first task, and the first task is completed through collaboration of multi-dimensional resources;
receiving, from the TFF, a first response message in response to the first request message, wherein the first response message comprises tunnel information of the TFF associated with the first task;
sending, to an access network device, the tunnel information of the TFF and information about a terminal associated with the first task;
receiving, from the access network device, tunnel information of the access network device associated with the first task; and
sending the tunnel information of the access network device to the TFF.

11. The method according to claim 10, wherein the tunnel for the first task comprises a tunnel between the access network device associated with the first task and the TFF associated with the first task.

12. The method according to claim 10 or 11, wherein the first request message comprises an identifier of the first task and information about a task process function TPF associated with the first task.

13. The method according to claim 12, wherein the first request
message further comprises at least one of the following: the information about the terminal associated with the first task, a data packet detection rule associated with the first task, a data packet forward action rule associated with the first task, or an identifier of a task control function TCF.

14. The method according to any one of claims 10 to 13, wherein the tunnel information of the TFF comprises the identifier of the first task, an internet protocol IP address of the TFF, and a tunnel endpoint identifier TEID of the TFF.

15. The method according to any one of claims 10 to 14, wherein the tunnel information of the access network device comprises the identifier of the first task, an IP address of the access network device, and a TEID of the access network device.

16. The method according to any one of claims 10 to 15, further comprising:
sending a second request message to the TFF, wherein the second request message is used to request to update the terminal associated with the first task and/or the TPF associated with the first task; and
receiving, from the TFF, a second response message in response to the second request message.

17. The method according to claim 16, wherein the second request message comprises the identifier of the first task, an update reason, and information about the terminal that needs to be updated and/or information about the TPF that needs to be updated.

18. The method according to claim 16 or 17, wherein the second response message comprises the identifier of the first task.

19. The method according to any one of claims 16 to 18, wherein when the second request message is used to request to update the terminal associated with the first task, the method further comprises:
sending a third request message to the access network device, wherein the third request message is used to request to update the terminal associated with the first task; and
receiving, from the access network device, a third response message in response to the third request message.

20. The method according to claim 19, wherein the third request message comprises the identifier of the first task, the update reason, and the information about the terminal that needs to be updated.

21. The method according to claim 19 or 20, wherein the third response message comprises the identifier of the first task.

22. A method for establishing a tunnel for a task, comprising:
receiving, from a task control function TCF, tunnel information of a task forward function TFF associated with a first task and information about a terminal associated with the first task, wherein the first task is completed through collaboration of multi-dimensional resources; and
sending tunnel information of an access network device to the TCF, wherein the access network device is associated with a tunnel for the first task.

23. The method according to claim 22, wherein the tunnel for the first task comprises a tunnel between the access network device associated with the first task and the TFF associated with the first task.

24. The method according to claim 22 or 23, wherein the tunnel information of the TFF comprises an identifier of the first task, an internet protocol IP address of the TFF, and a tunnel endpoint identifier TEID of the TFF.

25. The method according to any one of claims 22 to 24, wherein the tunnel information of the access network device comprises the identifier of the first task, an IP address of the access network device, and a TEID of the access network device.

26. The method according to any one of claims 22 to 25, further comprising:
determining a data radio bearer DRB associated with the first task; and
sending information about the DRB to the terminal associated with the first task.

27. The method according to any one of claims 22 to 26, further comprising:
receiving a third request message from the TCF, wherein the third request message is used to request to update the terminal associated with the first task;
updating a tunnel context of the first task based on the third request message, wherein the tunnel context of the first task is established when the access network device receives the tunnel information of the TFF associated with the first task and the information about the terminal associated with the first task; and
sending a third response message in response to the third request message to the TCF.

28. The method according to claim 27, wherein the third request message comprises the identifier of the first task, an update reason, and information about the terminal that needs to be updated.

29. The method according to claim 27 or 28, wherein the third response message comprises the identifier of the first task.

30. A communication apparatus, comprising a unit configured to implement the method according to any one of claims 1 to 9.

31. A communication apparatus, comprising a processor and a memory, wherein the processor is coupled to the memory, and the processor is configured to implement the method according to any one of claims 1 to 9.

32. A communication apparatus, comprising a processor and an interface circuit, wherein the interface circuit is configured to receive a signal from an apparatus other than the apparatus and transmit the signal to the processor, or send a signal from the processor to an apparatus other than the apparatus, and the processor is configured to implement the method according to any one of claims 1 to 9 by using a logic circuit or executing code instructions.

33. A communication apparatus, comprising a unit configured to implement the method according to any one of claims 10 to 21.

34. A communication apparatus, comprising a processor and a memory, wherein the processor is coupled to the memory, and the processor is configured to implement the method according to any one of claims 10 to 21.

35. A communication apparatus, comprising a processor and an interface circuit, wherein the interface circuit is configured to receive a signal from an apparatus other than the apparatus and transmit the signal to the processor, or send a signal from the processor to an apparatus other than the apparatus, and the processor is configured to implement the method according to any one of claims 10 to 21 by using a logic circuit or executing code instructions.

36. A communication apparatus, comprising a unit configured to implement the method according to any one of claims 22 to 29.

37. A communication apparatus, comprising a processor and a memory, wherein the processor is coupled to the memory, and the processor is configured to implement the method according to any one of claims 22 to 29.

38. A communication apparatus, comprising a processor and an interface circuit, wherein the interface circuit is configured to receive a signal from an apparatus other than the apparatus and transmit the signal to the processor, or send a signal from the processor to an apparatus other than the apparatus, and the processor is configured to implement the method according to any one of claims 22 to 29 by using a logic circuit or executing code instructions.

39. A computer-readable storage medium, wherein the computer-readable storage medium stores instructions, and when the instructions are run on a computer, the computer is enabled to perform the method according to any one of claims 1 to 9, or the method according to any one of claims 10 to 21, or the method according to any one of claims 22 to 29.

40. A computer program product, comprising a computer program or instructions, wherein when the computer program or the instruction are run by an apparatus, the method according to any one of claims 1 to 9 is performed, or the method according to any one of claims 10 to 21 is performed, or the method according to any one of claims 22 to 29 is performed.

41. A chip, comprising a processor, wherein the processor is coupled to a memory, and is configured to execute a computer program or instructions stored in the memory, so that the chip implements the method according to any one of claims 1 to 9, or the method according to any one of claims 10 to 21, or the method according to any one of claims 22 to 29.

42. A communication system, comprising:
a first communication apparatus, wherein the first communication apparatus is configured to perform the method according to any one of claims 1 to 9; and
a second communication apparatus, wherein the second communication apparatus is configured to perform the method according to any one of claims 10 to 21.

43. A communication system, comprising:
a first communication apparatus, wherein the first communication apparatus is configured to perform the method according to any one of claims 1 to 9;
a second communication apparatus, wherein the second communication apparatus is configured to perform the method according to any one of claims 10 to 21; and
a third communication apparatus, wherein the third communication apparatus is configured to perform the method according to any one of claims 22 to 29.
